# EUROPEAN PATENT APPLICATION

(11) **EP 2 875 894 A1**
(43) Date of publication of application: **27.05.2015**
(21) Application number: 12881259.1
(22) Date of filing: 17.07.2012
(51) Int. Cl.: B23G 5/06

(54) **SPIRAL TAP AND MANUFACTURING METHOD THEREFOR**

(71) Applicant: OSG Corporation, Aichi 442-0005 (JP)
(72) Inventor: NAKAJIMA Takayuki, Toyokawa-shi Aichi 441-1231 (JP)
(74) Representative: TBK
(86) International application number: PCT/JP2012/068113
(87) International publication number: WO 2014/013549

(57) **Abstract**

Provided is a spiral tap wherein tool life has been improved by facilitating chip removal during reversed withdrawal after thread-cutting while ensuring favorable cutting properties during thread-cutting.

Because a sub-groove (28), which is formed with a concave shape along the back edge (30) of a spiral flute (18) and makes the rake angle of the back edge (30) to be positive, is provided in the spiral flute (18) at least in the portion corresponding to the chamfer (22) of the spiral tap (10), necessary and sufficient chip room is secured while making it possible to increase the rake angle of the back edge (30) in the spiral flute (18). That is to say, the present invention provides a spiral tap (10) wherein tool life has been improved by facilitating chip removal during reversed withdrawal after thread-cutting while ensuring favorable cutting properties during thread-cutting.

## Description

### TECHNICAL FIELD

The present invention relates to a spiral tap and a method of manufacturing the same and particularly to an improvement for improving a tool life by facilitating chip removal during reversed withdrawal after thread-cutting while ensuring favorable cutting properties during thread-cutting.

### BACKGROUND ART

A spiral tap is known that has a male thread disposed on an outer circumferential portion and a cutting edge formed along a spiral flute disposed spirally around an axial direction so as to divide the male thread. A technique is proposed for improving a tool life by suppressing adhesion of chips in such a spiral tap. For example, this corresponds to a spiral flute tap described in patent document 1. According to this technique, it is considered that a continuous chip generated by cutting work can be restrained from adhering to a spiral flute by forming a convex heel surface on a heel (back edge) opposite to a cutting edge in the spiral flute.

### PRIOR ART DOCUMENT

### Patent Document

Patent Document 1: Japanese Laid-Open Patent Publication No. 2010-506746

### SUMMARY OF THE INVENTION

### Problem to Be Solved by the Invention

However, the conventional technique as described above results in a negative rake angle of the back edge in the spiral flute, which deteriorates chip removal during reversed withdrawal after thread-cutting, and therefore may actually reduce a tool life. It is conceivable that a large rake angle of the back edge in the spiral flute is achieved by means of reducing a curvature radius on the back edge side in the spiral flute; however, such a method makes a spiral flute itself smaller and, therefore, a so-called chip room becomes narrower, which tends to cause breakage due to chip clogging or biting. Thus, it is required to develop a spiral tap and a method of manufacturing the same improving a tool life by facilitating chip removal during reversed withdrawal after thread-cutting while ensuring favorable cutting properties during thread-cutting.

The present invention was conceived in view of the situations and it is therefore an object of the present invention to provide a spiral tap and a method of manufacturing the same improving a tool life by facilitating chip removal during reversed withdrawal after thread-cutting while ensuring favorable cutting properties during thread-cutting. Means for solving the Problem

To achieve the object, the first aspect of the invention provides a spiral tap having a male thread disposed on an outer circumferential portion and a cutting edge formed along a spiral flute disposed spirally around an axial direction so as to divide the male thread, the spiral tap being disposed with a sub-groove formed into a concave shape along a back edge of the spiral flute to make a rake angle of the back edge positive at least in a portion corresponding to a biting portion of the spiral tap in the spiral flute.

### Effects of the Invention

As described above, according to the first aspect of the invention, since the spiral tap is disposed with a sub-groove formed into a concave shape along a back edge of the spiral flute to make a rake angle of the back edge positive at least in a portion corresponding to a biting portion of the spiral tap in the spiral flute, the rake angle of the back edge can be made larger in the spiral flute while ensuring a necessary sufficient chip room. Therefore, the spiral tap can be provided that improves a tool life by facilitating chip removal during reversed withdrawal after thread-cutting while ensuring favorable cutting properties during thread-cutting.

The second aspect of the invention provides the spiral tap recited in the first aspect of the invention, wherein the rake angle of the back edge in the portion provided with the sub-groove is within a range of 3° or more to 12° or less. Consequently, the rake angle of the back edge in the spiral flute can be set to a preferred angle to facilitate chip removal as far as possible during reversed withdrawal after thread-cutting.

The third aspect of the invention provides the spiral tap recited in the first or second aspect of the invention, wherein an inner circumferential end of the sub-groove is located closer to a flute bottom of the spiral flute at least relative to a root of the male thread. Consequently, a large rake angle of the back edge in the spiral flute can be achieved by the sub-groove in a practical form while ensuring a necessary sufficient chip room.

The fourth aspect of the invention provides the spiral tap recited in any one of the first to third aspects of the invention, wherein the sub-groove has an arc shape in a cross section perpendicular to the axial direction, and wherein a radius of the arc is within a range of 10 % or more to 20 % or less of a nominal diameter of the spiral tap. Consequently, a large rake angle of the back edge in the spiral flute can be achieved by the sub-groove in a practical form while ensuring a necessary sufficient chip room.

To achieve the object, the fifth aspect of the invention provides a method of manufacturing a spiral tap having a male thread disposed on an outer circumferential portion and a cutting edge formed along a spiral flute disposed spirally around an axial direction so as to divide the male thread, the method comprising: a spiral flute forming step of forming a spiral flute; and a sub-groove forming step of, after the spiral flute is formed at the spiral flute forming step, forming a sub-groove by digging down into a concave shape along a back edge of the spiral flute to make a rake angle of the back edge positive at least in a portion corresponding to a biting portion of the spiral tap in the spiral flute. Consequently, a large rake angle of the back edge in the spiral flute can be achieved while ensuring a necessary sufficient chip room. Therefore, this enables the provision of the method of manufacturing the spiral tap that improves a tool life by facilitating chip removal during reversed withdrawal after thread-cutting while ensuring favorable cutting properties during thread-cutting.

### BRIEF DESCRIPTION OF THE DRAWINGS

Fig. 1 is a schematic front view for explaining a configuration of a three-flute spiral tap that is an embodiment of the present invention.
Fig. 2 is a cross-sectional view taken along II-II depicted in Fig. 1.
Fig. 3 is a diagram for explaining the configuration of a sub-groove disposed in a spiral flute in the spiral tap of Fig. 1 in more detail.
Fig. 4 is a cross-sectional view for explaining a configuration of a conventional spiral tap without the sub-groove for comparison with the spiral tap of this embodiment.
Fig. 5 is a cross-sectional view for explaining a configuration of a conventional spiral tap without the sub-groove for comparison with the spiral tap of this embodiment.
Fig. 6 is a cross-sectional view for explaining a configuration of a conventional spiral tap without the sub-groove for comparison with the spiral tap of this embodiment.
Fig. 7 depicts a table of the result of the test conducted by the present inventers for verifying the effect of the present invention and the average number of machined holes for the samples.
Fig. 8 is a diagram of a graph acquired from the test result of Fig. 7.
Fig. 9 depicts a table of the result of the test conducted by the present inventers for verifying the effect of the present invention and the average number of machined holes for the samples.
Fig. 10 is a diagram of a graph acquired from the test result of Fig. 9.
Fig. 11 depicts a photograph representative of characteristics of chips discharged during machining by the sample 3 of this embodiment in the test conducted by the present inventers for verifying the effect of the present invention.
Fig. 12 depicts a photograph representative of characteristics of chips discharged during machining by the sample 5 of the conventional technique in the test conducted by the present inventers for verifying the effect of the present invention.
Fig. 13 depicts a photograph representative of characteristics of chips discharged during machining by the sample 1 of the conventional technique in the test conducted by the present inventers for verifying the effect of the present invention.
Fig. 14 is a process chart for explaining a main portion of an example of the method of manufacturing the spiral tap in Fig.1.
Fig. 15 is a schematic perspective view exemplarily illustrating other configuration of the tap portion in the spiral tap of the present invention created by the method of manufacturing depicted in Fig. 14.
Fig. 16 is a schematic perspective view exemplarily illustrating other configuration of the tap portion in the spiral tap of the present invention created by the method of manufacturing depicted in Fig. 14.

### MODE FOR CARRYING OUT THE INVENTION

In a spiral tap of the present invention, preferably, the curvature radius of the sub-groove is smaller than the curvature radius of the spiral flute in a cross-sectional view on a plane perpendicular to the axial center.

The present invention is preferably applied to a spiral tap with a tapping length of about 1.5D to 2D when a nominal diameter is D. Particularly, the present invention produces a marked effect in a spiral tap with a tapping length of about 2D.

In the spiral tap of the present invention, preferably, the back edge in a portion provided with the sub-groove is formed into a hook shape or a rake shape (spade shape) in a cross-sectional view on a plane perpendicular to the axial center.

The spiral tap of the present invention is disposed with three spiral flutes rotationally symmetrically at 120° relative to the axial center so as to divide the male thread; however the present invention is also preferably applied to a spiral tap provided with two, i.e., a pair of, spiral flutes.

The spiral tap of the present invention is usually used for thread-cutting of a blind hole. In the thread-cutting of a blind hole, chips must be discharged toward a shank and, at the time of reversal during the thread-cutting, the spiral tap must be reversed and withdrawn from a prepared hole when a predetermined tapping length is ensured in the prepared hole. At the start of the reversal of the spiral tap, chips of machining during normal rotation are left momentarily (for an extremely short predetermined time) in the prepared hole. The present invention produces an effect of more certainly and smoothly discharging the chips left in the prepared hole at the time of reversal of the spiral tap.

A preferred embodiment of the present invention will now be described in detail with reference to the drawings. For convenience of description, the drawings used in the following description are not necessarily precisely depicted in terms of dimension ratio etc. of portions. The portions mutually common to the embodiments are denoted by the same reference numerals and will not be described.

### Embodiment

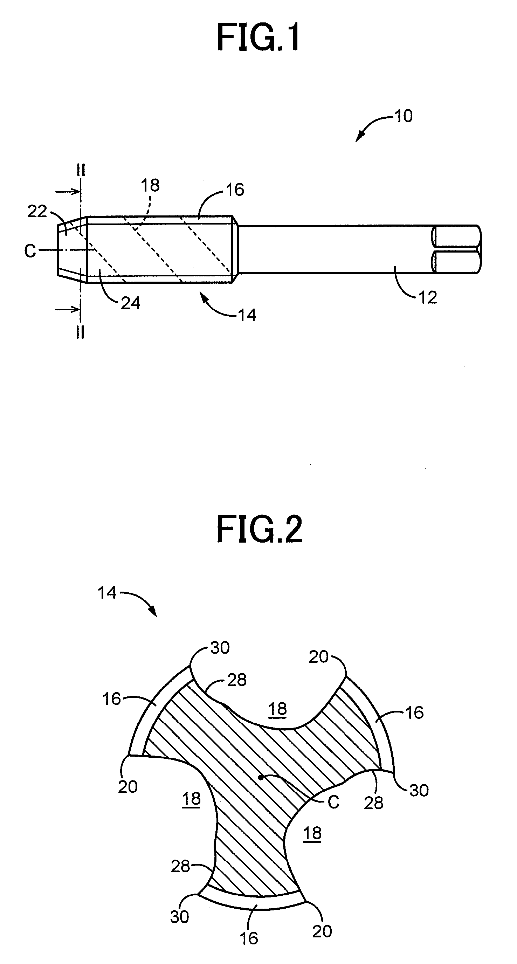

Fig. 1 is a schematic front view for explaining a configuration of a three-flute spiral tap 10 that is an embodiment of the present invention, and Fig. 2 is a cross-sectional view when a portion of the spiral tap 10 is cut by a plane perpendicular to an axial center C (a cross-sectional view taken along II-II depicted in Fig. 1). The spiral tap 10 of this embodiment is preferably used for thread-cutting of a blind hole and includes, as depicted in Fig. 1, a circular column-shaped (cylindrically-shaped) shank portion 12, and a tap portion 14 integrally formed on a tip side of the shank portion 12 concentrically (on the common axial center C) with the shank portion 12. A neck portion with a diameter smaller than the shank portion 12 may be disposed between the shank portion 12 and the tap portion 14. The tap portion 14 is preferably formed integrally with the shank portion 12; however, the tap portion 14 may detachably be configured for the shank portion 12. In such a form, the tap portion 14 is integrally fixed to a tip portion of the shank portion 12 when used in machining of a female thread by the spiral tap 10.

In the thread-cutting by the spiral tap 10, the tap portion 14 is screwed into a prepared hole to be machined, so as to cut a female thread in an inner circumferential surface thereof. An outer circumferential portion (outer circumferential side) of the tap portion 14 has a male thread (screw thread) 16 formed into a thread groove shape corresponding to a female thread to be machined (female thread to be machined by the spiral tap 10) and is disposed with, for example, three spiral flutes 18 rotationally symmetrically at 120° relative to the axial center C so as to divide the male thread 16, and cutting edges 20 (see Fig. 2) are formed along the spiral flutes 18. The spiral flutes 18 are preferably formed into a spiral shape twisted in the same direction as the rotation direction of the male thread 16. Therefore, if the male thread 16 is a right-hand thread, the spiral flutes 18 are formed into a clockwise spiral shape while, if the male thread 16 is a left-hand thread, the spiral flutes 18 are formed into a counterclockwise spiral shape.

As depicted in Fig. 1, the tap portion 14 includes a biting portion 22 with a portion including a crest of the male thread 16 removed such that the male thread 16 is tapered toward a tip (an end portion of the tap portion 14 opposite to the shank portion 12), and a complete thread portion 24 formed continuously from the biting portion 22 such that the male thread 16 is formed as a complete screw thread. The biting portion 22 is a lead portion cutting a prepared hole in a work to form a female thread in the machining of the female thread by the spiral tap 10 and corresponds to a configuration of several crests (1.5 to 3 crests) from the tip in the male thread 16. The complete thread portion 24 is a portion for finishing a female thread surface formed by the biting portion 22 and improving guidance or a self-guiding property of the tap portion 14 in the machining of the female thread by the spiral tap 10. The complete thread portion 24 is formed into a shape substantially identical to the shape of a screw thread of the female thread to be machined by the spiral tap 10.

The male thread 16 is, for example, a right-hand thread that is a single thread with a lead angle of about 3° 23'. The diameter dimension of the male thread 16 is set such that the nominal diameter D is about 6 mm, and the diameter dimension of the shank 12 is substantially the same as the male thread 16. The cutting edges 20 have a rake angle of about 6° to 8°, for example, and an edge thickness (outer diameter) of 1.88 mm to 1.99 mm, for example. The number of crests of the male thread 16 corresponding to the biting portion 22 is about 1.5 to 3 and a tip diameter is about 4.8 mm, for example, with a slope angle of about 13° 30', for example. The spiral flutes 18 have a tilt angle (helix angle) β of, for example, about 39° 30' relative to the axial center in a front view, a flute bottom radius of about 1.11 mm to 1.17 mm, for example, and a flute length of about 29.6±0.5 mm, for example. The male thread 16 has an axial length dimension of about 21.6 mm, for example, and the spiral tap 10 has an axial full length of about 67.1 mm, for example. The spiral tap 10 has a tapping length of about 1.5D to 2D, preferably 2D, when the nominal diameter is D.

As depicted in Fig. 2, the spiral tap 10 of this embodiment includes sub-grooves (concave grooves) 28 formed into a concave shape along back edges 30 of the spiral flutes 18 at least in a portion corresponding to the biting portion 22 in the spiral flutes 18. In other words, for example, the sub-grooves 28 having a spiral shape in the same track as the spiral flutes 18 are disposed on outer circumferential end portions (heels) on the side opposite to the cutting edges 20 in the spiral flutes 18. The sub-grooves 28 correspond to different curved surfaces formed by further digging down into a concave shape from curved surfaces corresponding to the spiral flutes 18, for example. The sub-grooves 28 may be disposed only in the biting portion 22 and may not necessarily be disposed in the complete thread portion 24; however, the sub-grooves 28 may continuously be disposed over the entire length of the tap portion 14 (i.e., also in the complete thread portion 24). Particularly, in a form of the spiral flute 18 and the sub-groove 28 integrally machined in a process of manufacturing the spiral tap 10 (e.g., concurrent machining using a formed grindstone), the sub-grooves 28 are preferably disposed over the entire length of the spiral flutes 18.

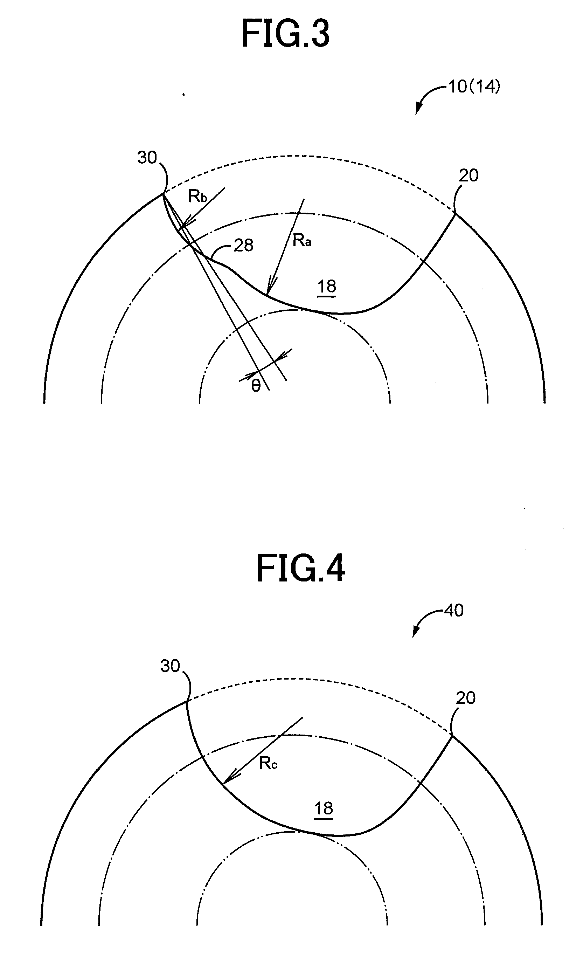

Fig. 3 is a diagram for explaining the configuration of the sub-groove 28 disposed in the spiral flute 18 in the spiral tap 10 of this embodiment in more detail. Fig. 3 depicts the outer diameter of the male thread 16 indicated by a broken line, the root diameter (root) indicated by a dashed-dotted line, and the flute bottom diameter of the spiral flutes 18 indicated by a dashed-two dotted line (the same applies to Figs. 4 to 6). As depicted in Fig. 3, the tap portion 14 of the spiral tap 10 of this embodiment has the sub-groove 28 formed along the back edge 30 of the spiral flute 18 so as to set a rake angle (heel angle) θ of the back edge 30 to a positive angle. In other words, since the curved surface corresponding to the sub-groove 28 makes up at least a portion of the back edge 30, the back edge 30 is formed into a hook shape or a rake shape (spade shape). The rake angle θ of the back edge 30 in the portion provided with the sub-groove 28 is preferably within a range of 3° or more to 12° or less, more preferably within a range of 5° or more to 10° or less.

The sub-groove 28 preferably has an arc shape in a cross section perpendicular to the axial center C. In other words, although the sub-groove 28 has a circular arc shape corresponding to a predetermined radius, the shape may not necessarily be a completely circular arc and may be configured as a curved shape having a predetermined curvature. The radius of the arc corresponding to the sub-groove 28, i.e., a curvature radius R_{b} of a curved surface corresponding to the sub-groove 28, is preferably within a range of 10 % or more to 20 % or less of the nominal diameter D of the spiral tap 10 (the male thread 16). The curvature radius R_{b} of the sub-groove 28 is preferably smaller than a curvature radius Rₐ of the spiral flute 18 (curvature radius on the side closer to the sub-groove 28 relative to the flute bottom). For example, in the spiral tap 10 of M6.0, i.e., the nominal diameter D=6.0 mm, the curvature radius Rₐ of the spiral flute 18 is about 1.8 mm (0.30D), for example, and the curvature radius R_{b} of the sub-groove 28 is about 1.1 mm (0.18D) if the rake angle θ of the back edge 30 is about 5°, and is about 0.67 mm (0.11D) if the rake angle θ is about 10°, for example.

The sub-groove 28 preferably has an inner circumferential end located closer to the flute bottom (indicated by the dashed-two dotted line in Fig. 3) of the spiral flute 18 at least relative to the root diameter (indicated by the dashed-dotted line in Fig. 3) of the male thread 16 in the cross-sectional view perpendicular to the axial center C. In other words, the sub-groove 28 is formed by digging down into a concave shape from the crest of the male thread 16 (indicated by the broken line in Fig. 3) to a predetermined position closer to the center relative to the root diameter of the male thread 16 (position corresponding to a predetermined radial dimension between the root diameter and the flute bottom diameter) in the cross-sectional view perpendicular to the axial center C. Therefore, the tap portion 14 is configured by adjacently arranging a concave groove corresponding to the spiral flute 18 closer to the flute bottom and a concave groove corresponding to the sub-groove 28 closer to the back edge 30 between the flute bottom and the back edge 30 in the spiral flute 18 in the cross-sectional view perpendicular to the axial center C.

Figs. 4 to 6 are cross-sectional views for explaining conventional spiral taps without the sub-groove 28 when the spiral taps are cut by a plane corresponding to Fig. 3 described above, for comparison with the spiral tap 10 of this embodiment. A spiral tap 40 depicted in Fig. 4 has the spiral flute 18 formed such that the rake angle of the back edge 30 is set to a positive angle, and a curvature radius R_{c} of the spiral flute 18 is, for example, about 1.8 mm (0.30D) in the spiral tap 40 of M6.0, i.e., the nominal diameter D=6.0 mm. Since this configuration has the relatively small curvature radius of the spiral flute 18, a chip room formed by the spiral flute 18 becomes narrower than the spiral tap 10 of this embodiment depicted in Fig. 3, for example.

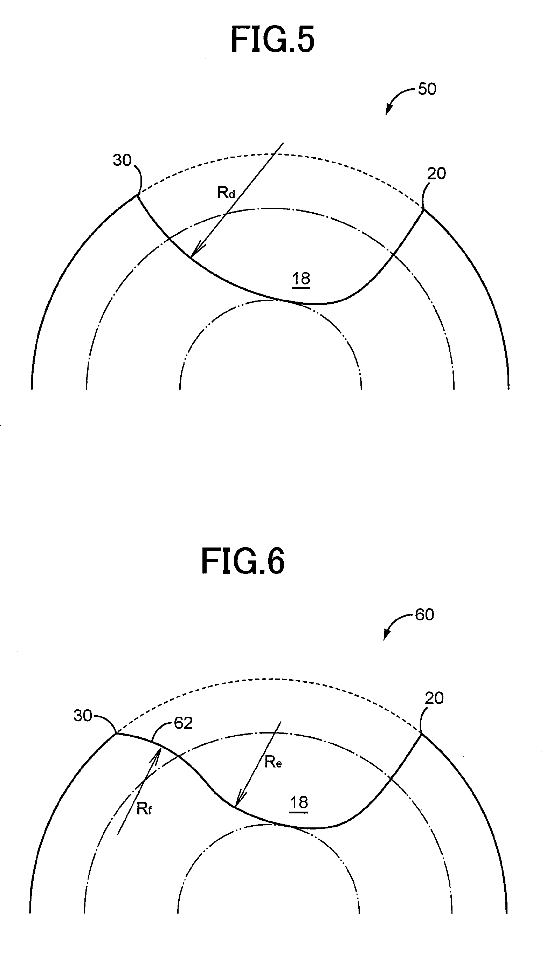

A spiral tap 50 depicted in Fig. 5 is configured with a relatively large curvature radius of the spiral flute 18 so as to ensure a sufficient chip room, and a curvature radius R_{d} of the spiral flute 18 is, for example, about 2.7 mm (0.45D) in the spiral tap 50 of M6.0, i.e., the nominal diameter D=6.0 mm. Although this configuration has a wider chip room formed by the spiral flute 18 as compared to the spiral tap 40 depicted in Fig. 4, the curvature radius of the spiral flute 18 is relatively large and, therefore, the rake angle of the back edge 30 is set to a negative angle.

A spiral tap 60 depicted in Fig. 6 has a convex heel surface 62 formed on a heel (the back edge 30) on the side opposite to the cutting edge 20 in the spiral flute 18 so as to suppress adhesion of a continuous chip generated by cutting work to the spiral flute 18. Therefore, the heel surface 62 is disposed as a convex surface formed into a convex shape along the back edge 30 of the spiral flute 18 to make the rake angle of the back edge 30 negative. In the spiral tap 60 of M6.0, i.e., the nominal diameter D=6.0 mm, a curvature radius Rₑ of the spiral flute 18 is about 1.8 mm (0.30D), for example, and a curvature radius R_{f} of the heel surface 62 is about 1.7 mm (0.28D), for example. Although this configuration has an effect of suppressing the adhesion of chips to the spiral flute 18 during cutting by the spiral tap 60, the chips are scraped against the heel surface 62 formed into the convex shape during reversed withdrawal and may actually cause a reduction in tool life.

A test conducted by the present inventers for verifying the effect of the present invention will then be described. To verify the effect of the present invention, the present inventors conducted the test for comparing the durability performance by using the spiral tap 10 of this embodiment as depicted in Fig. 3 and the conventional spiral taps 40, 50, and 60 as depicted in Figs. 4 to 6. In particular, samples 1 to 5 were created as spiral taps of M6.0, i.e., the nominal diameter D=6.0 mm, with the tapping length of 1.5 D; the sample 1 is the conventional spiral tap 40 with the curvature radius of the spiral flute 18 set to about 1.8 mm (0.30D); the sample 2 is the conventional spiral tap 50 with the curvature radius of the spiral flute 18 set to about 2.7 mm (0.45D); the sample 3 is the spiral tap 10 (having the back edge 30 with the rake angle of 5°) of this embodiment with the curvature radius of the spiral flute 18 set to about 1.8 mm (0.30D) and the curvature radius of the sub-groove 28 set to about 1.1 mm (0.18D); the sample 4 is the spiral tap 10 (having the back edge 30 with the rake angle of 10°) of this embodiment with the curvature radius of the spiral flute 18 set to about 1.8 mm (0.30D) and the curvature radius of the sub-groove 28 set to about 0.67 mm (0.11D); the sample 5 is the conventional spiral tap 60 with the curvature radius of the spiral flute 18 set to about 1.8 mm (0.30D) and the curvature radius of the heel surface 62 set to about 1.7 mm (0.28D); and the durability performance test related to tapping was conducted under the following test conditions. Specifically, the spiral taps of the samples 1 to 5 were used for tapping to examine the numbers of machined holes of three spiral taps until the end of the tool life for each of the samples 1 to 5.

### [Test Conditions]

Size: M6×1
Work material: S45C (JIS G 4051)
Machine used: vertical machining center
Cutting oil: water-soluble
Cutting speed: 15 m/min
Prepared hole diameter: ϕ5 mm

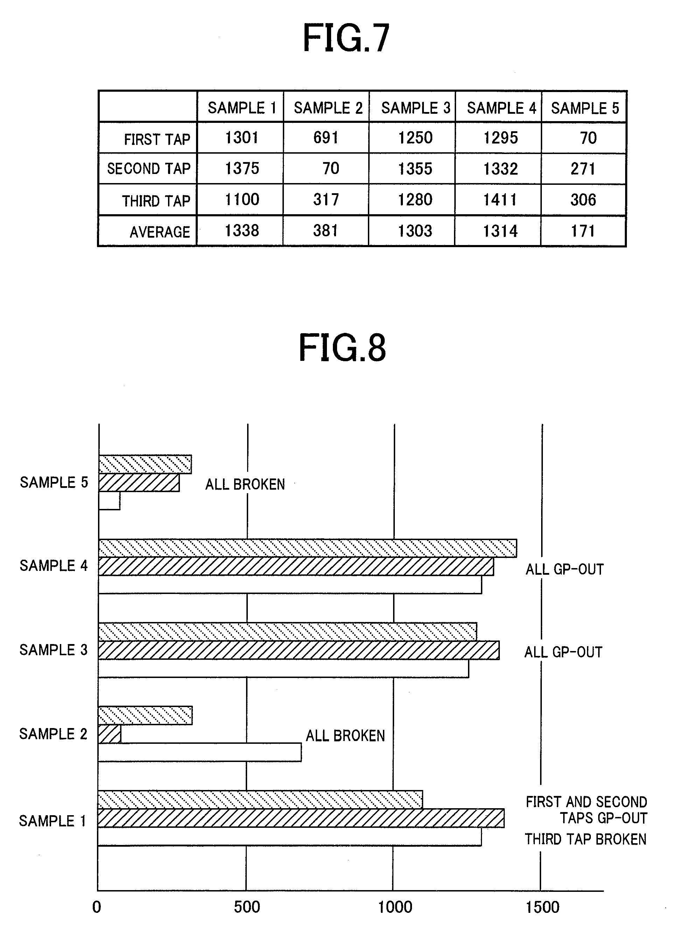

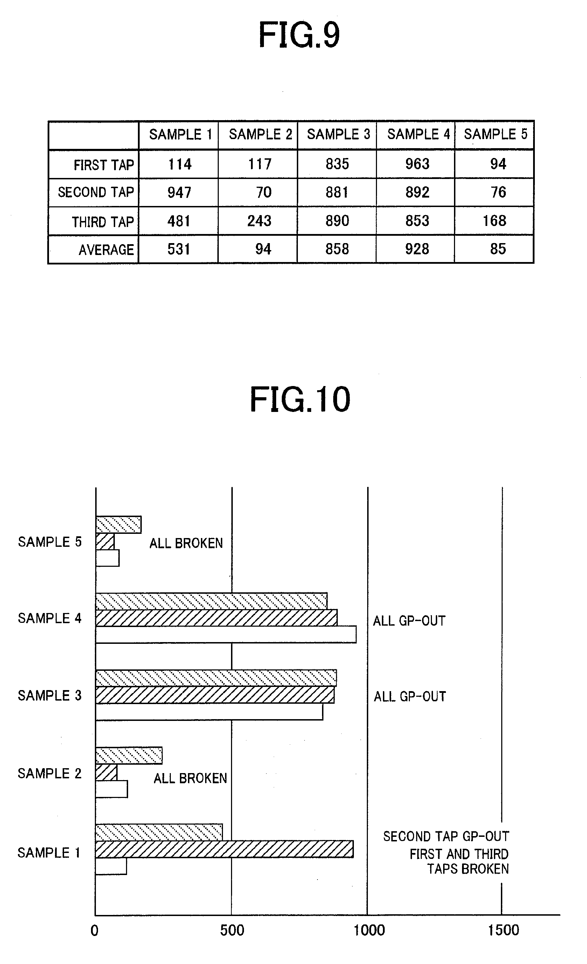

Fig. 7 depicts a table of the result of the test and the average number of machined holes (average value of three taps) for the samples, and Fig. 8 is a diagram of a graph acquired from the test result of Fig. 7. In Fig. 8, the results of first, second, and third taps of each of the samples are represented by a white bar, a bar with solid diagonal lines from upper right to lower left, and a bar with broken diagonal lines from upper left to lower right, respectively (the same applies to Fig. 10 described later). "GP-OUT" indicates the case that a go-side gauge no longer passes through, and this time point or the time of breakage is considered as the end of the tool life. As depicted in Figs. 7 and 8, it is understood from the test result of the durability performance test that, while the average numbers of machined holes are 381 and 171 for the samples 2 and 5 corresponding to the conventional technique, the average numbers of machined holes are 1303 and 1314 for the samples 3 and 4 corresponding to this embodiment, which means that the life can be prolonged several times. On the other hand, the sample 1 corresponding to the conventional technique exhibits a favorable tool life since the average number of machined holes is 1338; however, breakage occurs in the third sample. It is considered that this is because of deterioration in a chip discharge property during thread-cutting caused by a narrow chip room due to the configuration as depicted in Fig. 4. While all the three samples of each of the samples 2 and 5 corresponding to the conventional technique reached the end of life due to breakage, all the three samples of each of the samples 3 and 4 corresponding to this embodiment reached the end of life due to "GP-OUT" without breakage. Therefore, it is demonstrated that the spiral tap 10 of this embodiment suppresses the occurrence of breakage due to chip clogging or biting during thread-cutting while improving the chip removal during reversed withdrawal after thread-cutting and, therefore, achieves excellent durability performance as compared to the spiral taps 40, 50, and 60 corresponding to the conventional technique.

The present inventors created spiral taps having the tapping length of 2D with the curvature radiuses of the spiral flute 18, the sub-groove 28, and the heel surface 62 same as the samples 1 to 5 to conduct the same durability performance test under the test condition described above. Specifically, the spiral taps of the samples 1 to 5 were used for tapping to examine the numbers of machined holes of three spiral taps until the end of the tool life for each of the samples 1 to 5. Fig. 9 depicts a table of the result of the test and the average number of machined holes (average value of three taps) for the samples, and Fig. 10 is a diagram of a graph acquired from the test result of Fig. 9. As depicted in Figs. 9 and 10, it is understood from the test result of the durability performance test that, while the average numbers of machined holes are 94 and 85 for the samples 2 and 5 corresponding to the conventional technique, the average numbers of machined holes are 858 and 928 for the samples 3 and 4 corresponding to this embodiment, which means that the life can be prolonged several times. On the other hand, the sample 1 corresponding to the conventional technique exhibits a relatively favorable tool life since the average number of machined holes is 531; however, the number of machined holes varies as indicated by the results of the first, second, and third taps, which are 114, 947, and 481, respectively, and breakage occurs in the first and third samples. It is considered that this is because of deterioration in a chip discharge property during thread-cutting caused by a narrow chip room due to the configuration as depicted in Fig. 4. While all the three samples of each of the samples 2 and 5 corresponding to the conventional technique reached the end of life due to breakage, all the three samples of each of the samples 3 and 4 corresponding to the embodiment reached the end of life due to "GP-OUT" without breakage. Therefore, it is demonstrated that, even in the case of the spiral tap having the tapping length of 2D, as is the case with the spiral tap having the tapping length of 1.5D, the spiral tap 10 of this embodiment suppresses the occurrence of breakage due to chip clogging or biting during thread-cutting while improving the chip removal during reversed withdrawal after thread-cutting and, therefore, achieves excellent durability performance as compared to the spiral taps 40, 50, and 60 corresponding to the conventional technique.

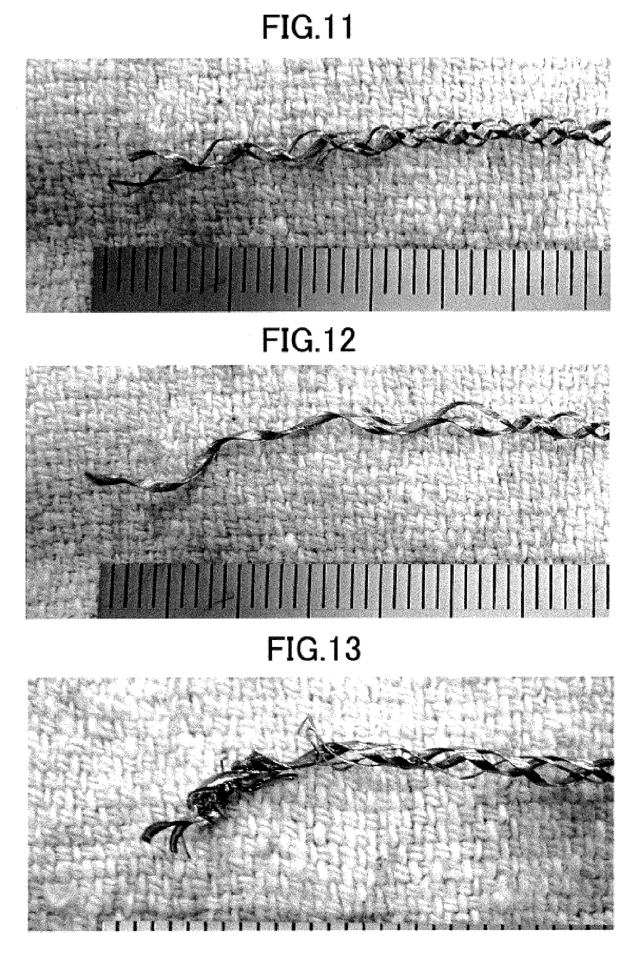

Figs. 11 to 13 depict photographs representative of characteristics of chips discharged in the durability performance test related to the spiral taps having the tapping length of 2D, and Figs. 11, 12, and 13 correspond to chips during machining by the sample 3, chips during machining by the sample 5, and chips during machining by the sample 1, respectively. From the chips during machining by the sample 3 depicted in Fig. 11, it is understood that the three curled chips corresponding to the three respective spiral flutes 18 are discharged separately from each other while being entangled with each other. The chips during machining by the sample 5 depicted in Fig. 12 represent that the three curled chips corresponding to the three respective spiral flutes 18 are entangled with each other and integrated into one piece at end portions thereof (end portions on the left side of the plane of the figure). In other words, the three chips extend without separation. It is considered that this is because the chips are scraped against the heel surfaces 62 formed in the spiral flutes 18 in the configuration as depicted in Fig. 6. The chips during machining by the sample 1 depicted in Fig. 13 represent that the three curled chips corresponding to the three respective spiral flutes 18 are entangled with each other and made into a ball shape due to clogging of the chips at one position. It is considered that this is because the clogging of chips occurs since sufficient chip rooms cannot be ensured by the spiral flutes 18 in the configuration as depicted in Fig. 4. It is understood from the characteristics of the chips depicted in Figs. 11 to 13 that the spiral tap 10 of this embodiment is excellent in the chip discharge property and a chip separation property as compared to the conventional technique.

A method of manufacturing the spiral tap 10 of this embodiment will be described. In a process of manufacturing the spiral tap 10, the spiral flute 18 and the sub-groove 28 may integrally be machined by a grinding work etc., using a formed grindstone, for example. Particularly, when the sub-groove 28 is continuously disposed over the entire length of the tap portion 14 (i.e., also in the complete thread portion 24) along the spiral flute 18, this manufacturing method is preferably employed. On the other hand, when the sub-groove 28 is not disposed over the entire length of the tap portion 14, for example, such that the sub-groove 28 is disposed in the portion corresponding to the biting portion 22 while a portion corresponding to the complete thread portion 24 has a portion without the sub-groove 28, the spiral flute 18 may first be machined before machining the sub-groove 28.

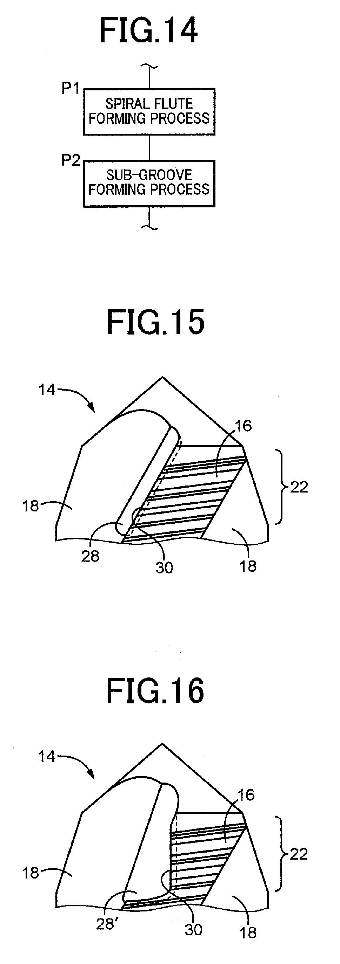

Fig. 14 is a process chart for explaining a main portion of an example of the method of manufacturing the spiral tap 10. First, in a spiral flute forming process P1, the spiral flute 18 is formed in the tap portion 14 by a grinding work etc., using a grindstone. In a sub-groove forming process P2, the sub-groove 28 is formed by digging down into a concave shape along the back edge 30 of the spiral flute 18 by a grinding work etc., using a grindstone to make the rake angle of the back edge 30 positive at least in the portion corresponding to the biting portion 22 in the spiral flute 18 formed in the spiral flute forming process P1. Therefore, after the spiral flute 18 is formed in the spiral flute forming process P1, the sub-groove 28 is formed in the spiral flute 18 in the sub-groove forming process P2.

Figs. 15 and 16 are schematic perspective views exemplarily illustrating other configurations of the tap portion 14 in the spiral tap of the present invention created by the method of manufacturing depicted in Fig. 14. Fig. 15 exemplarily illustrates a configuration having the sub-groove 28 disposed only in the portion corresponding to the biting portion 22 in the spiral flute 18. Although the sub-groove 28 is not disposed in the portion corresponding to the complete thread portion 24 in the spiral flute 18 in this configuration, a portion involved in chip removal during reversed withdrawal after thread-cutting is the back edge 30 in the portion corresponding to the biting portion 22 and, therefore, since the sub-groove 28 is included that makes the rake angle of the back edge 30 positive in the portion, the configuration depicted in Fig. 15 produces a certain degree of the effect of the present invention.

Fig. 16 exemplarily illustrates a configuration in which a sub-groove 28' making the rake angle of the back edge 30 positive is formed by cutting with the grindstone in the direction substantially perpendicular to the axial center C of the spiral tap 10 in the sub-groove forming process P2. Therefore, the back edge 30 is formed by scooping out a portion of the male thread 16 in association with the formation of the sub-groove 28'. In this configuration, the sub-groove 28' is wider as compare to the configuration having the sub-groove 28 disposed along the spiral flute 18 as depicted in Fig. 15 and, in particular, the sub-groove 28' is configured to have the width gradually increasing toward the complete thread portion 24. The back edge 30 is not along the extending direction of the spiral flute 18 and extends in the axial center C direction of the spiral tap 10. Since the rake angle of the back edge 30 in the portion corresponding to the biting portion 22 can be set to a predetermined positive value and a sufficient chip room can be ensured also in this configuration, a certain degree of the effect of the present invention can be produced.

As described above, since this embodiment has the sub-groove 28, 28' formed into a concave shape along the back edge 30 of the spiral flute 18 to make the rake angle of the back edge 30 positive at least in the portion corresponding to the biting portion 22 of the spiral tap 10 in the spiral flute 18, the rake angle of the back edge 30 can be made larger in the spiral flute 18 while ensuring a necessary sufficient chip room. Therefore, the spiral tap 10 can be provided that improves a tool life by facilitating chip removal during reversed withdrawal after thread-cutting while ensuring favorable cutting properties during thread-cutting.

The spiral tap 10 of this embodiment is usually used for thread-cutting of a blind hole. In the thread-cutting of a blind hole, chips must be discharged toward the shank portion 12 and, at the time of reversal during the thread-cutting, the spiral tap 10 must be reversed and withdrawn from a prepared hole when a predetermined tapping length is ensured in the prepared hole. At the start of the reversal of the spiral tap 10, chips of machining during normal rotation are left momentarily (for an extremely short predetermined time) in the prepared hole. The spiral tap 10 of the present invention produces an effect of more certainly and smoothly discharging the chips left in the prepared hole at the time of reversal of the spiral tap 10.

Since the rake angle of the back edge 30 in the portion provided with the sub-groove 28, 28' is within a range of 3° or more to 12° or less, the rake angle of the back edge 30 in the spiral flute 18 can be set to a preferred angle to facilitate chip removal as far as possible during reversed withdrawal after thread-cutting.

Since the inner circumferential end of the sub-groove 28, 28' is located closer to the flute bottom of the spiral flute 18 at least relative to the root of the male thread 16, a large rake angle of the back edge in the spiral flute 28, 28' can be achieved by the sub-groove 28, 28' in a practical form while ensuring a necessary sufficient chip room.

Since the sub-groove 28, 28' has an arc shape in a cross section perpendicular to the axial center C direction and a radius of the arc is within a range of 10 % or more to 20 % or less of the nominal diameter D of the spiral tap 10, a large rake angle of the back edge 30 in the spiral flute 18 can be achieved by the sub-groove 28, 28' in a practical form while ensuring a necessary sufficient chip room.

With regard to the method of manufacturing the spiral tap 10 having the male thread 16 disposed on the outer circumferential portion and the cutting edge 20 formed along the spiral flute 18 disposed spirally around the axial direction so as to divide the male thread 16, the method includes the spiral flute forming process P1 in which the spiral flute 18 is formed and the sub-groove forming process P2 in which, after the spiral flute 18 is formed in the spiral flute forming process P1, the sub-groove 28, 28' is formed by digging down into a concave shape along the back edge 30 of the spiral flute 18 to make the rake angle of the back edge 30 positive at least in a portion corresponding to the biting portion 22 of the spiral tap 10 in the spiral flute 18, and therefore, a large rake angle of the back edge 30 in the spiral flute 18 can be achieved while ensuring a necessary sufficient chip room. This enables the provision of the method of manufacturing the spiral tap 10 that improves a tool life by facilitating chip removal during reversed withdrawal after thread-cutting while ensuring favorable cutting properties during thread-cutting.

Although the preferred embodiment of the present invention has been described in detail with reference to the drawings, the present invention is not limited thereto and is implemented with various modifications applied within a range not departing from the spirit thereof.

### NOMENCLATURE OF ELEMENTS

10: spiral tap 12: shank portion 14: tap portion 16: male thread 18: spiral flute 20: cutting edge 22: biting portion 24: complete thread portion 28, 28': sub-groove 30: back edge 40, 50, 60: spiral tap (conventional technique) 62: heel surface C: axial center P1: spiral flute forming step P2: sub-groove forming step

## Claims

1. A spiral tap having a male thread disposed on an outer circumferential portion and a cutting edge formed along a spiral flute disposed spirally around an axial direction so as to divide the male thread,
the spiral tap being disposed with a sub-groove formed into a concave shape along a back edge of the spiral flute to make a rake angle of the back edge positive at least in a portion corresponding to a biting portion of the spiral tap in the spiral flute.

2. The spiral tap of claim 1, wherein the rake angle of the back edge in the portion provided with the sub-groove is within a range of 3° or more to 12° or less.

3. The spiral tap of claim 1 or 2, wherein an inner circumferential end of the sub-groove is located closer to a flute bottom of the spiral flute at least relative to a root of the male thread.

4. The spiral tap of any one of claims 1 to 3, wherein the sub-groove has an arc shape in a cross section perpendicular to the axial direction, and wherein a radius of the arc is within a range of 10 % or more to 20 % or less of a nominal diameter of the spiral tap.

5. A method of manufacturing a spiral tap having a male thread disposed on an outer circumferential portion and a cutting edge formed along a spiral flute disposed spirally around an axial direction so as to divide the male thread, the method comprising:
a spiral flute forming step of forming a spiral flute; and
a sub-groove forming step of, after the spiral flute is formed at the spiral flute forming step, forming a sub-groove by digging down into a concave shape along a back edge of the spiral flute to make a rake angle of the back edge positive at least in a portion corresponding to a biting portion of the spiral tap in the spiral flute.
